**Europäisches Patentamt**

**European Patent Office**

**Office européen des brevets**

(19)

(11) Numéro de publication : **0 614 287 A1**

# (12) DEMANDE DE BREVET EUROPEEN

(21) Numéro de dépôt : **94400418.3**

(22) Date de dépôt : **28.02.94**

(51) Int. Cl.⁵ : **H04B 7/005**

(30) Priorité : **03.03.93 FR 9302471**
**20.07.93 FR 9308875**

(43) Date de publication de la demande :
**07.09.94 Bulletin 94/36**

(84) Etats contractants désignés :
**AT BE DE DK ES FR GB IT NL SE**

(71) Demandeur : **ALCATEL N.V.**
**Strawinskylaan 341,**
**NL-1077 XX Amsterdam (NL)**
(84) **BE DE DK ES GB IT NL SE AT**

(71) Demandeur : **ALCATEL RADIOTELEPHONE,**
**société française**
**10, rue de la Baume**
**F-75008 Paris (FR)**
(84) **FR**

(72) Inventeur : **Mourot, Christophe**
**36, rue Paul Bert**
**F-92600 Asnieres (FR)**
Inventeur : **Kumar, Vinod**
**15, rue Poliveau**
**F-75005 Paris (FR)**
Inventeur : **Wautier, Armelle, c/o SUPELEC**
**Plateau de Moulon**
**F-91190 Gif sur Yvette (FR)**
Inventeur : **Dany, Jean-Claude, c/o SUPELEC**
**Plateau de Moulon**
**F-91190 Gif sur Yvette (FR)**

(74) Mandataire : **Renaud-Goud, Thierry et al**
**c/o SOSPI,**
**14-16, rue de la Baume**
**F-75008 Paris (FR)**

(54) **Egalisation de blocs de données dans un système de communication à AMRT.**

(57)     Procédé pour égaliser un bloc de données(BD) en réception dans un système de communication à accès multiple à répartition dans le temps (AMRT).

A la réception du bloc(BD), on estime la réponse impulsionnelle du canal sur lequel ce bloc a été transmis, on évalue un ensemble (PP) de paramètres de réception, on détermine à partir dudit ensemble (PP) de paramètres une longueur optimale (Nopt) du bloc, et si cette longueur optimale (Nopt) est inférieure à la longueur réelle (LM) du bloc(BD), on entreprend une poursuite (PO) des variations du canal.

Utilisation en radiotéléphonie.

FIG.2

EP 0 614 287 A1

La présente invention concerne un procédé pour égaliser un bloc de données en réception dans un système de communication à accès multiple à répartition dans le temps.

Elle vise également un récepteur mettant en oeuvre ce procédé.

L'égalisation d'un bloc de données en réception dans un système de communication à accès multiple à répartition dans le temps (AMRT) est nécessaire pour prendre en compte les dispersions temporelles existant dans des canaux multi-voies et conduisant à des interférences inter-symboles.

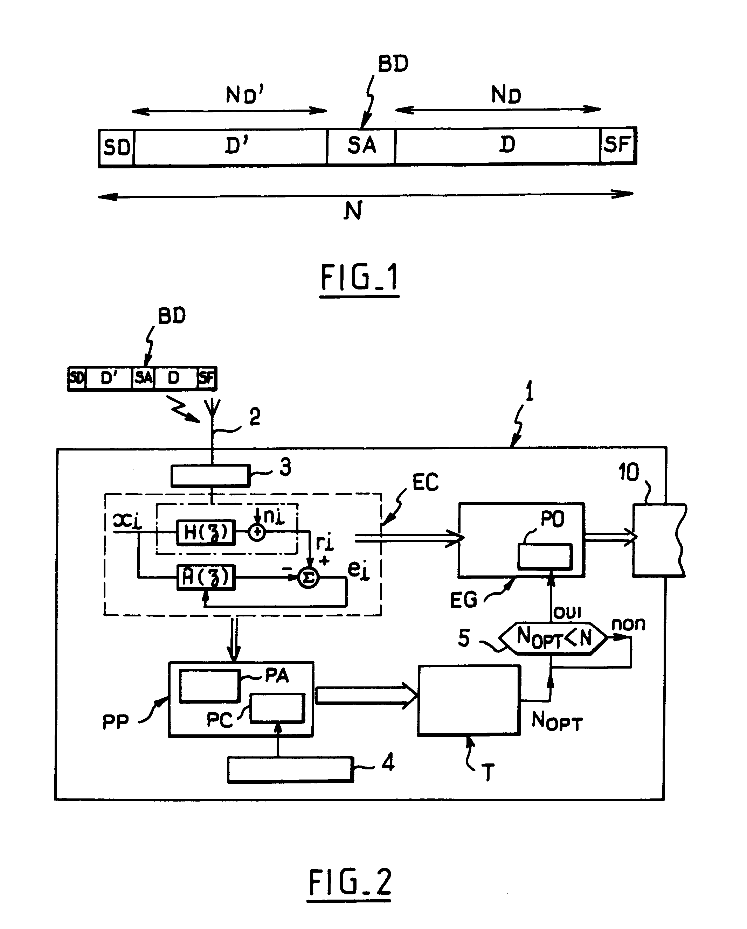

Le dimensionnement d'un bloc de données BD, représenté de façon schématique en figure 1 et comprenant des symboles de début SD et de fin SF, deux séquences de données D, D' de longueurs respectives $N_D$, $N_{D'}$ et une séquence d'apprentissage SA insérée entre ces deux séquences de données, résulte d'un compromis entre :

- les besoins du service, à savoir le nombre 2N de symboles de données à transmettre par bloc ;
- le taux de variation du canal de transmission qui impose une limite supérieure $N_{max}$ au nombre de symboles de données dans le bloc et des limites inférieure et supérieure à la longueur de la séquence d'apprentissage ; et
- l'efficacité requise de la voie radio, qui impose une limite inférieure à la valeur du rapport du nombre de symboles de données dans le bloc sur la longueur totale du bloc.

Pour corriger l'interférence entre symboles dans un récepteur, on utilise un égaliseur qui, pour fonctionner correctement, doit connaître la réponse impulsionnelle du canal de transmission. A cette fin, des symboles particuliers émis dans la séquence d'apprentissage sont des symboles connus, par opposition aux symboles de données qui font l'objet de la transmission et qui, par hypothèse, ne sont pas connus du récepteur. La séquence d'apprentissage est choisie en fonction des caractéristiques du canal de transmission et plus particulièrement en fonction de sa longueur. Une séquence d'apprentissage est- généralement composée de K symboles précurseurs, P symboles de référence, et éventuellement de K symboles "postcurseurs", où K est la longueur du canal qui se définit comme le nombre de durées-symboles qui est équivalent à la différence du trajet le plus long et du trajet le plus court de ce canal, et P>K.

Pour établir la réponse impulsionnelle du canal, on utilise dans le récepteur un dispositif d'estimation de canal qui génère une réplique de cette séquence d'apprentissage et la corrèle avec la séquence de symboles reçus correspondante. Le résultat de la corrélation est un jeu de coefficients $h_i$ où i varie de O à L, L étant la longueur du canal, ce jeu de coefficients étant prévu pour renseigner l'égaliseur. Le trajet le plus direct du canal est représenté par $h_o$, tandis que les autres coefficients représentent les trajets plus longs qui produisent des interférences avec le premier.

Il est essentiel de dimensionner les séquences de données d'un bloc de façon à pouvoir concilier une efficacité suffisante ou spécifiée de la voie radio et une validité de l'estimation de la réponse impulsionnelle du canal pour tous les symboles de données y compris ceux situés aux deux extrémités du bloc et donc les plus éloignés de la séquence d'apprentissage.

Pour résoudre le problème des interférences entre symboles en réception, une première solution consiste à prévoir une égalisation sans dispositif de poursuite des variations de canal. Si le bloc reçu est trop long, alors la réponse impulsionnelle estimée au centre n'est plus valable aux extrémités. On est alors contraint de n'utiliser que des blocs très courts, ce qui implique un faible nombre de données par rapport aux symboles d'apprentissage.

Une autre solution consiste à prévoir une égalisation avec utilisation permanente d'un dispositif de poursuite. Mais si le bloc reçu est court par rapport au taux de variation du canal, alors la réponse impulsionnelle estimée au centre reste valable aux extrémités. Dans ce cas, le dispositif de poursuite est utilisé alors qu'il n'est pas nécessaire, ce qui conduit à une consommation excessive.

Le but de l'invention est de remédier à ces inconvénients en proposant un procédé pour égaliser un bloc de données en réception dans un système à accès multiple à répartition dans le temps, qui offre plus de souplesse et d'efficacité pour des canaux variant dans le temps que les procédés actuels.

Suivant l'invention, à la réception du bloc, on estime la réponse impulsionnelle du canal sur lequel ce bloc a été transmis, on évalue un ensemble de paramètres de réception, on détermine à partir dudit ensemble de paramètres une longueur optimale du bloc, et si cette longueur optimale est inférieure à la longueur réelle du bloc, on entreprend une poursuite des variations du canal.

Ainsi, avec le procédé selon l'invention, la complexité de traitement et la consommation sont minimisées tout en préservant les performances de la réception, puisqu'une poursuite des variations du canal n'est entreprise que lorsque une longueur réelle du bloc trop élevée peut contribuer à rendre la réponse impulsionnelle estimée non valable aux extrémités du bloc.

Selon un mode préféré de mise en oeuvre du procédé selon l'invention, appliqué à un bloc de données comprenant une séquence d'apprentissage comportant une séquence de référence et des symboles précurseurs, et des symboles de données répartis en une première séquence de données et une seconde séquence de données transmises respectivement avant et après ladite séquence d'apprentissage, ledit canal de communication présentant une réponse impulsionnelle de longueur finie, la détermination d'une longueur optimale du bloc de données comprend une étape d'optimisation de la longueur de chaque séquence de données dans laquelle on réalise une estimation de la réponse impulsionnelle du canal de communication à partir de symboles reçus de la séquence de référence et des symboles précurseurs, on associe à chaque séquence de données une erreur quadratique moyenne d'estimation dont on détermine un encadrement par deux fonctions limites respectivement inférieure et supérieure, dépendant notamment de la longueur de cette séquence de données et de la longueur de la séquence de référence, et on détermine à partir desdites fonctions limites inférieure et supérieure un encadrement de la longueur optimale de chaque séquence de données correspondant à une plage spécifiée d'erreur quadratique.

Suivant un autre aspect de l'invention, il est proposé un récepteur appartenant à un système de communication à accès multiple à répartition dans le temps, comprenant des moyens pour égaliser un bloc de données transmis sur un canal de communication, ces moyens égaliseurs comportant des moyens pour poursuivre les variations de ce canal, mettant en oeuvre le procédé selon l'invention, caractérisé en ce qu'il comprend en outre des moyens pour déterminer en fonction d'un ensemble de paramètres de réception une longueur optimale du bloc, des moyens pour comparer cette longueur optimale à la longueur réelle du bloc et des moyens pour activer les moyens de poursuite de variation du canal uniquement lorsque les moyens de comparaison indiquent que la longueur optimale du bloc est inférieure à la longueur réelle du bloc.

D'autres particularités et avantages de l'invention apparaîtront encore dans la description ci-après. Aux dessins annexés donnés à titre d'exemples non limitatifs:
- la figure 1 représente la structure d'un bloc de données ; et
- la figure 2 est un synoptique des opérations essentielles mises en oeuvre dans le procédé selon l'invention;
- la figure 3 illustre les principaux paramètres dimensionnels de la structure d'un bloc de données impliqués dans le procédé selon l'invention ;
- la figure 4 illustre un mode de détermination graphique de la longueur optimale d'une séquence de données avec le procédé selon l'invention ; et On va maintenant expliquer le principe du procédé d'égalisation selon l'invention en référence aux figures 1 à 4.

Il existe une valeur optimale Nopt pour la longueur d'un bloc de données et cette valeur optimale dépend des paramètres suivants :
- de la longueur du canal ;
- de la longueur de la séquence d'apprentissage ;
- du rapport signal à bruit ;
- de l'écart de fréquence maximal dû à l'effet Doppler ;
- de la période symbole, qui est l'inverse du débit symbole ; et
- du module des symboles.

La longueur du canal, la longueur de la séquence d'apprentissage, la période symbole et le module des symboles sont connus au niveau du récepteur. Un exemple de structure d'une séquence d'apprentissage, qui en détermine notamment la longueur, est décrit dans la demande de brevet français 92 13847 déposée le 18 Novembre 1992 au nom du présent déposant.

Le rapport signal à bruit et l'écart de fréquence maximal dû à l'effet Doppler peuvent être estimés, mais sont généralement calculés pour d'autres besoins au sein du récepteur.

On peut ainsi au niveau d'un récepteur déterminer la longueur optimale Nopt, au sens des performances requises par le système de communication.

Il est avantageux de dresser une ou plusieurs tables de vérité fournissant la longueur optimale Nopt en fonction des paramètres précités. Trois méthodes peuvent être utilisées pour générer le contenu de ces tables de vérité.

Une première méthode consiste à prendre en compte des résultats de simulation telles que celles présentés dans l'article "An investigation of block-adaptive decision feedback equalization for frequency selective fading channels" (Investigation d'égalisation adaptative de bloc à retour de décision pour canaux à fading sélectif en fréquences) de G.W. DAVIDSON, D.D. FALCONER et A.U.H. SHEIKH, Canadian J.Elect. & Comp.Eng, Vol.13 No.3-4, 1988, qui divulgue des résultats de simulation pour un égaliseur à retour de décision mettant en évidence l'influence de la longueur de la séquence d'apprentissage sur les performances d'un récepteur.

A titre d'exemple, des travaux de simulation ont été effectués par les inventeurs sur des égaliseurs hybrides à retour de décision adaptatif (DFSE) mettant en oeuvre un estimateur de séquence à probabilité maximum (MLSE) utilisant un algorithme de Viterbi. Ces travaux ont mis en évidence une longueur optimale d'une séquence d'apprentissage et ont débouché sur une méthode d'estimation par simulation de cette longueur optimale dans le cas de séquences à auto-corrélation zéro et amplitude constante (CAZAC) et pour des modulations à déplacement de phase à quatre états.

Ainsi, dans le cas d'un canal radio invariant dans le temps, plus longue est la séquence d'apprentissage, mieux le canal est estimé. Dans le cas d'un canal radio mobile multi-voies variant dans le temps, il existe une longueur optimale de la séquence d'apprentissage et les travaux de simulation montrent que la longueur de la séquence de référence, qui représente une partie de la séquence d'apprentissage, doit être suffisamment grande pour permettre l'estimation des coefficients du canal mais suffisamment courte pour éviter une variation significative du canal pendant l'estimation et même pendant le décodage des symboles de donnée lorsqu'il n'y a pas de poursuite du canal. Une séquence d'apprentissage surdimensionnée peut ainsi dégrader les performances du récepteur.

Il est à noter que pour des séquences de type pseudo-CAZAC, à savoir des séquences qui ne sont de type CAZAC que sur une certaine plage autour du pic principal, seule une inégalité peut être établie pour la longueur optimale pour laquelle on définit alors une borne inférieure et une borne supérieure.

Une seconde méthode pour générer ces tables de vérité consiste à effectuer des mesures sur le terrain. Cette méthode fournit assurément des résultats remarquables mais peut s'avérer particulièrement coûteuse.

Une troisième méthode consiste à appliquer les résultats d'une étude théorique du principe de réception mis en oeuvre. Une limitation de cette méthode réside dans le fait qu'il n'existe pas actuellement d'étude théorique générale applicable à toute configuration de réception, mais des études théoriques spécifiques d'une application.

L'article "Estimation of Time-Varying Digital Radio Channels" (Estimation de canaux radio numériques variant dans le temps) de R.A. ZIEGLER et J.M. CIOFFI, IEEE Transactions on Vehicular Technology, Vol.41; No 2, Mai 1992, montre l'intérêt de prendre en considération la longueur de la séquence d'apprentissage et la longueur des données et fournit des informations à caractère théorique permettant d'estimer ou de calculer certains paramètres de réception. Les inventeurs ont à ce sujet entièrement développé une méthode analytique donnant des bornes supérieures et inférieures pour la longueur optimale de la séquence d'apprentissage et celle des données, pour des séquence CAZAC et pseudo-CAZAC et des modulations à déplacement de phase.

On va maintenant décrire un exemple de mise en oeuvre du procédé selon l'invention dans un récepteur de communication mobile 1, en référence à la figure 2.

A la réception sur une antenne 2 d'un bloc BD transmis par voie aérienne et après traitement pour obtenir un signal en bande de base 3, on effectue une estimation EC du canal et notamment de sa réponse impulsionnelle.

Si $\{x_i\}$ et $\{r_i\}$ représentent deux ensembles de variables respectivement d'entrée et de sortie observées pendant une période d'estimation, si $n_i$ représente un terme de bruit additif à un instant iTs où Ts est la période symbole, le canal en bande de base équivalent de réponse H(z) est modélisé par un filtre transversal numérique invariant temporellement et de réponse H(z). Les coefficients du filtre transversal sont ajustés à partir d'une information d'erreur $e_i$.

A partir des résultats de l'estimation EC et d'autres informations issues par exemple d'un dispositif 4 de correction d'écart de fréquence au sein du récepteur, on obtient un ensemble PP de paramètres de réception comprenant des paramètres connus PA et des paramètres calculables PC. On rappelle que les paramètres directement accessibles sont la longueur K du canal, la longueur de la séquence d'apprentissage SA, la période symbole et le module des symboles. Les paramètres calculables sont le rapport signal à bruit et l'écart maximal dû à l'effet Doppler. Puis, on consulte une table de vérité T, en pratique une mémoire non volatile ou tout autre dispositif équivalent, adressée par tout ou partie des paramètres P, pour obtenir une estimation de la longueur optimale $N_{opt}$ qui est alors comparée à la longueur réelle N du bloc pour déterminer si au cours du processus d'égalisation EG, on doit ou non effectuer une poursuite PO des variations du canal.

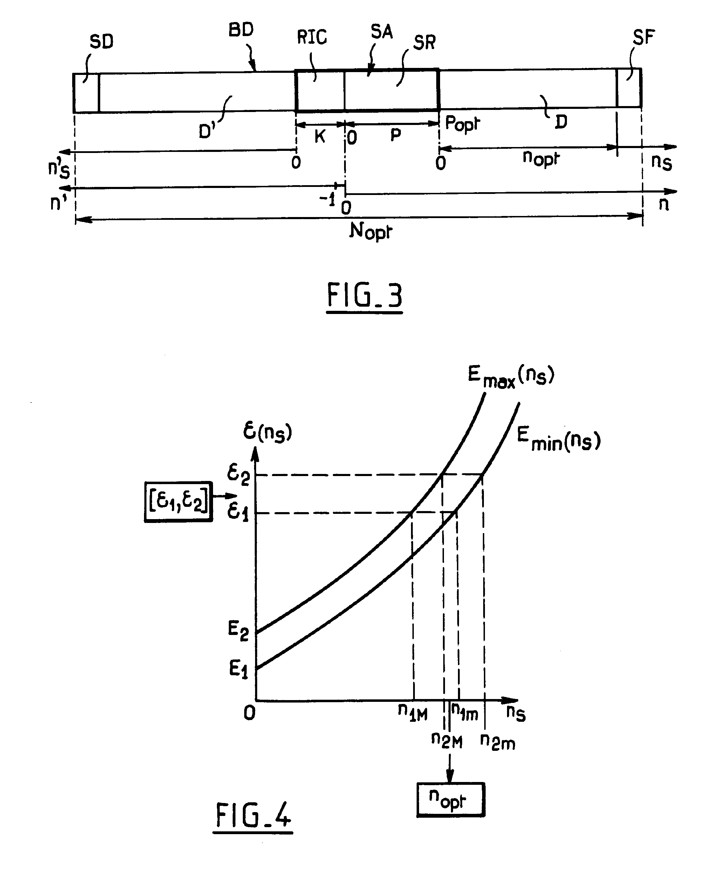

On va maintenant décrire un mode préféré de détermination de la longueur optimale d'un bloc de données qui peut être mis en oeuvre dans le cadre du procédé d'égalisation selon l'invention, en référence aux figures 3 à 5.

Soient:

K : la longueur de la réponse impulsionnelle du canal RIC,

P : la longueur de la séquence de référence SR dans la séquence d'apprentissage SA,

L : la longueur de la séquence d'apprentissage SA,

H : le vecteur des coefficients de la réponse impulsionnelle réelle (ce vecteur n'est pas directement accessible en réception),

$\hat{H}$ : le vecteur des coefficients de la réponse impulsionnelle estimée du canal,

R : le vecteur des symboles reçus correspondant à la séquence de référence SR dans la séquence d'apprentissage SA,

B : le vecteur des échantillons de bruit auquel est soumis le canal de communication, où $b_i$ représente par exemple du bruit blanc gaussien de moyenne nulle et de variance $\frac{\sigma_N^2}{2}$.

$$H : \begin{vmatrix} h_0 \\ h_1 \\ \cdot \\ \cdot \\ \cdot \\ h_K \end{vmatrix} \qquad \hat{H} : \begin{vmatrix} \hat{h}_0 \\ \hat{h}_1 \\ \cdot \\ \cdot \\ \cdot \\ \hat{h}_K \end{vmatrix} \qquad R : \begin{vmatrix} r_{K+1} \\ r_{K+2} \\ \cdot \\ \cdot \\ \cdot \\ r_L \end{vmatrix} \qquad B : \begin{vmatrix} b_{K+1} \\ b_{K+2} \\ \cdot \\ \cdot \\ \cdot \\ b_L \end{vmatrix}$$

E : le vecteur des coefficients de l'erreur quadratique moyenne d'estimation, et

A : une matrice (L-K)x(K+1) complètement définie par les symboles d'apprentissage transmis $x_1,...,x_L$, A est donnée par

$$A^H = \begin{bmatrix} x_{K+1}^\bullet & \cdot & \cdot & x_L^\bullet \\ x_K^\bullet & \cdot & \cdot & \cdot \\ \cdot & \cdot & \cdot & \cdot \\ x_1^\bullet & \cdot & \cdot & x_{L-K}^\bullet \end{bmatrix}$$

où $.^H$ est l'opérateur Hermitien et $.^*$ est l'opérateur de conjugaison complexe. Bien que ce canal soit théoriquement de longueur infinie, on utilise usuellement une approximation par un filtre linéaire transversal de longueur finie K+1, comme l'enseigne par exemple l'ouvrage de J.G. PROKIS: "Digital Communications" 2nde édition, Mac GRAW HILL 1989.

Le vecteur des symboles de référence reçus R et $x_1,...,x_L$ sont liés par la relation suivante :

$$r_i = \sum_{k=0}^{K} h_k x_{i-k} + b_i \qquad i = K+1, ..., L \qquad (1)$$

Cette relation peut également être écrite sous la forme suivante :

$$R = AH + B \quad (2)$$

On a également :

$$E = R - A\hat{H} \quad (3)$$

On introduit

$$J = E^H E \quad (4)$$

On choisit H par une estimation au sens des moindres carrés. H minimise J et vérifie donc:

$$\frac{\partial J}{\partial H} = -2A^H R + 2A^H AH = 0 \quad (5)$$

Cette équation a une solution unique si et seulement si $L \geq 2K + 1$, c'est à dire si et seulement si le nombre de colonnes dans $A^H$ est supérieur ou égal au nombre de lignes.

On aboutit alors, si la matrice $A^H A$ est inversible, à l'expression suivante:

$$\hat{H} = (A^H A)^{-1} A^H R \quad (6)$$

Les séquences à auto-corrélation-zéro et amplitude constante CAZAC et pseudo-CAZAC vérifient cette condition.

Dans le cas d'un canal variant dans le temps, on définit des fonctions $R_i(\Delta_t)$ de corrélation normalisées des différents trajets du canal. En plus des propriétés de corrélation de la séquence d'apprentissage, la valeur

EP 0 614 287 A1

exacte des symboles qui la composent influence la précision d'estimation de la réponse impulsionnelle du canal. Cependant, pour une séquence CAZAC, en supposant que les différents trajets du canal et les échantillons de bruit sont indépendants statistiquement. Un canal variant dans le temps peut être modélisé par un filtre numérique transverse.

Les coefficients de la réponse impulsionnelle vérifient:

$$E[h_j(k)h_i * (l)] = 0 \text{ pour } i \neq j \qquad \forall\, k, l \quad (7)$$
$$E[h_j(k)h_j * (l)] = \sigma_j^2 R_j((k - l)T_s) \qquad \forall\, k, l \quad (8)$$

où:

$T_s$ est période de transmission des symboles,

$\sigma_j^2$ est la puissance moyenne du jème trajet.

Dans la suite de la description et pour rendre la lecture de celle-ci plus aisée, on convient de remplacer $R(kT_s)$ par $R(k)$.

On suppose dans la suite que la séquence d'apprentissage est de type CAZAC et périodique de période P. On considère les symboles $u_0,..., u_{P-1}$ de la séquence de référence qui sont émis sur le canal de communication. Pour faciliter les notations, on conviendra dans la suite que

$$\begin{aligned} u_{-i} &= u_{P-i} \quad i \in [1, P-L], \\ u_{i+P} &= u_i \quad i \in [0, P-1] \end{aligned} \qquad (9)$$

On suppose en outre que $|u_j| = 1$. On peut exprimer l'échantillon reçu sans bruit de la façon suivante:

$$y(n) = \sum_{k=0}^{K} u_{n-k} h_k(n) \quad \text{pour } n \in [0, P-1] \qquad (10)$$

En l'absence de bruit, et selon l'équation (6), une estimation des coefficients de canal s'exprime ainsi :

$$\hat{h}_i = \frac{1}{P} \sum_{\lambda=1}^{P} \sum_{k=0}^{K} u_{\lambda-i-1}^{*} u_{\lambda-k-1} h_k(\lambda - 1) \quad \text{pour } i \in [0, K] \qquad (11)$$

L'erreur quadratique d'estimation de coefficient est donnée par :

$$E\left[(\hat{h}_i - h_i(n))(\hat{h}_i - h_i(n))^{*}\right] = E\left[\hat{h}_i \hat{h}_i^{*}\right] - E\left[\hat{h}_i h_i^{*}(n)\right] - E\left[\hat{h}_i^{*} h_i(n)\right] + \sigma_i^{2} \qquad (12)$$

$$E\left[\hat{h}_i h_i^{*}(n)\right]$$

peut être exprimée ainsi :

$$E\left[\hat{h}_i h_i^{*}(n)\right] = \frac{1}{P} \sum_{\lambda=1}^{P} \sum_{k=0}^{K} u_{\lambda-i-1}^{*} u_{\lambda-k-1} h_k(\lambda - 1) h_i^{*}(n) \qquad (13)$$

A partir de l'équation (7), on en déduit que

$$E\left[\hat{h}_i h_i^{*}(n)\right] = \frac{1}{P} \sum_{\lambda=1}^{P} |u_{\lambda-i-1}|^{2} h_i(\lambda - 1) h_i^{*}(n) \qquad (14)$$

6

et par conséquent,

$$E\left[\hat{h}_i h_i^{\bullet}(n)\right] = E\left[\hat{h}_i^{\bullet} h_i(n)\right] = \frac{1}{P}\sigma_i^2 \sum_{\lambda=1}^{P} R_i(\lambda - n - 1) \qquad (15)$$

$$E\left[\hat{h}_i \hat{h}_i^{\bullet}\right]$$

est défini par :

$$E\left[\hat{h}_i \hat{h}_i^{\bullet}\right] = \frac{1}{P^2} E\left(\sum_{\lambda=1}^{P}\sum_{\gamma=1}^{P}\sum_{k=0}^{K}\sum_{l=0}^{K} u_{\lambda-k-1}u_{\lambda-i-1}^{\bullet}u_{\gamma-l-1}^{\bullet}u_{\gamma-i-1}h_k(\lambda-1)h_l^{\bullet}(\gamma-1)\right) \qquad (16)$$

Des équations (7) et (8), il s'ensuit que

$$E\left[\hat{h}_i \hat{h}_i^{\bullet}\right] = \frac{1}{P^2}\sum_{\lambda=1}^{P}\sum_{\gamma=1}^{P}\sum_{k=0}^{K} u_{\lambda-k-1}u_{\lambda-i-1}^{\bullet}u_{\gamma-k-1}^{\bullet}u_{\gamma-i-1}\sigma_k^2 R_k(\lambda-\gamma) \qquad (17)$$

Pour obtenir une limite supérieure de

$$\sum_{i=0}^{K} E\left[h_i h_i^{\bullet}\right],$$

on peut utiliser une inégalité liant la longueur P de la séquence de référence et la longueur K de la réponse impulsionnelle du canal, imposée pour satisfaire l'unicité du vecteur d'estimation H:

$$P \geqq K + 1 \qquad (18)$$

De cette inégalité, on déduit que :

$$\sum_{i=0}^{K} E\left[\hat{h}_i \hat{h}_i^{\bullet}\right] \leq \sum_{i=0}^{P-1} E\left[\hat{h}_i \hat{h}_i^{\bullet}\right] \qquad (19)$$

On obtient alors :

$$\sum_{i=0}^{K} E\left[\hat{h}_i \hat{h}_i^{\bullet}\right] \leq \frac{1}{P^2}\sum_{i=0}^{P-1} \sum_{\lambda=1}^{P}\sum_{\gamma=1}^{P}\sum_{k=0}^{K} u_{\lambda-k-1}u_{\lambda-i-1}^{\bullet}u_{\gamma-k-1}^{\bullet}u_{\gamma-i-}\sigma_k^2 R_k(\lambda-\gamma)$$

$$(20)$$

$$\leq \frac{1}{P^2}\sum_{\lambda=1}^{P}\sum_{\gamma=1}^{P}\sum_{k=0}^{K} u_{\lambda-k-1}u_{\gamma-k-1}^{\bullet}\sigma_k^2 R_k(\lambda-\gamma)\sum_{i=0}^{P-1} u_{\lambda-i-1}^{\bullet}u_{\gamma-i-1}$$

$$(21)$$

Comme la séquence de référence est supposée de type CAZAC, il s'en suit que :

$$\sum_{i=0}^{P-1} u_{\lambda-i-1}^{\bullet} u_{\gamma-i-1} = \begin{array}{ll} 0 & \text{pour } \lambda \neq \gamma \\[6pt] P & \text{pour } \lambda = \gamma \end{array} \qquad (22)$$

Par conséquent,

$$\sum_{i=0}^{K} E(\hat{h}_i \hat{h}_i^{\bullet}) \leq \frac{1}{P} \sum_{\lambda=1}^{P} \sum_{k=0}^{K} u_{\lambda-k-i} u_{\lambda-k-i}^{\bullet} \sigma_k^2 R_k(0) \qquad (23)$$

$$\leq \frac{1}{P} \sum_{k=0}^{K} \sigma_k^2 R_k(0) \sum_{\lambda=1}^{P} \left| u_{\lambda-k-i} \right|^2 \qquad (23.1)$$

$$\leq \frac{1}{P} \sum_{k=0}^{K} \sigma_k^2 R_k(0) P \qquad (23.2)$$

$$\leq \sum_{k=0}^{K} \sigma_k^2 \qquad (23.3)$$

$$\sum_{i=0}^{K} E(\hat{h}_i \hat{h}_i^{\bullet}) \leq \sigma^2 \qquad (24)$$

où

$$\sigma^2 = \sum_{k=0}^{K} \sigma_k^2 \qquad (25)$$

$\sigma^2$ représente la puissance moyenne du canal.
Il s'agit maintenant de déterminer une limite inférieure pour

$$\sum_{i=0}^{K} E(\hat{h}_i \hat{h}_i^{\bullet}) \,.$$

On introduit pour cela une estimée moyenne $\tilde{h}_i$ des estimées des coefficients de canal avec un décalage cyclique de la même séquence d'apprentissage :

$$\tilde{h}_i = \frac{1}{P^2} \sum_{n=0}^{P-1} \sum_{\lambda=1}^{P} \sum_{k=0}^{K} u_{\lambda-k-1+n} u_{\lambda-i-1+n}^{\bullet} h_k(\lambda-1) \qquad (26)$$

$$= \frac{1}{P} \sum_{\lambda=1}^{P} h_{\lambda}\, (\lambda - 1) \qquad\qquad (26.1)$$

On peut alors déduire une limite supérieure de l'inégalité suivante :

$$E\left[ (\hat{h}_i - \tilde{h}_i)(\hat{h}_i^{\,*} - \tilde{h}_i^{\,*}) \right] = E\left[ \hat{h}_i \hat{h}_i^{\,*} \right] - E\left[ \tilde{h}_i \hat{h}_i^{\,*} \right] - E\left[ \hat{h}_i^{\,*} \tilde{h}_i \right] + E\left[ \tilde{h}_i \tilde{h}_i^{\,*} \right] \geq 0 \quad (27)$$

Or,

$$E\left[ \hat{h}_i \tilde{h}_i^{\,*} \right] = E\left[ \hat{h}_i^{\,*} \tilde{h}_i \right] = \frac{1}{P^2} \sum_{\lambda=1}^{P} \sum_{\gamma=1}^{P} \sigma_i^{\,2} R_i (\lambda - \gamma) \qquad\qquad (28)$$

$$E\left[ \tilde{h}_i \tilde{h}_i^{\,*} \right] = \frac{1}{P^2} \sum_{\lambda=1}^{P} \sum_{\gamma=1}^{P} \sigma_i^{\,2} R_i (\lambda - \gamma) \qquad\qquad (29)$$

En substituant les équations (28) et (29) dans l'équation (27), on obtient :

$$E\left[ \hat{h}_i \hat{h}_i^{\,*} \right] \geq \frac{1}{P^2} \sum_{\lambda=1}^{P} \sum_{\gamma=1}^{P} \sigma_i^{\,2} R_i (\lambda - \gamma) \qquad\qquad (30)$$

On obtient finalement :

$$\sum_{i=0}^{K} E\left[ (\hat{h}_i - h_i(n))(\hat{h}_i - h_i(n))^{\,*} \right] \leq \sum_{i=0}^{K} 2\sigma_i^2 (1 - \frac{1}{P} \sum_{\lambda=1}^{P} R_i(\lambda - n - 1)) \qquad\qquad (31)$$

$$(32) \Downarrow$$

$$\sum_{i=0}^{K} E\left[ (\hat{h}_i - h_i(n))(\hat{h}_i - h_i(n))^{\,*} \right] \geq \sum_{i=0}^{K} \sigma_i^2 (1 - \frac{2}{P} \sum_{\lambda=1}^{P} R_i(\lambda - n - 1) + \frac{1}{P^2} \sum_{\lambda=1}^{P} \sum_{\gamma=1}^{P} R_i(\lambda - \gamma))$$

Il est alors utile d'effectuer le changement de variable suivant, en référence à la figure 3 :

$$n_S = n - P \qquad (33)$$

$$\sum_{\lambda=1}^{P} R_i (\lambda - n - 1) = \sum_{\mu=1}^{P} R_i (-\mu - P - n) = \sum_{\mu=1}^{P} R_i (\mu + n_s) \qquad\qquad (34)$$

Pour la partie précédant la séquence d'apprentissage, si on introduit une nouvelle variable n'=-n-1, en référence à la figure 3,

$$n'_s = n' + K \qquad (35)$$

$$\sum_{\lambda=1}^{P} R_i (\lambda - n - 1) = \sum_{\lambda=1}^{P} R_i (\lambda + n') = \sum_{\lambda=1}^{P} R_i (\lambda + n'_s + K) \qquad (36)$$

On va maintenant déterminer les bornes respectivement supérieure et inférieure de l'erreur d'estimation en fonction de la nouvelle variable $n_s$.

$$\sum_{i=0}^{K} E\left\| \hat{h}_i - h_i(n_s) \right\|^2 \le \frac{(K+1)\sigma_n^2}{P} + \sum_{i=0}^{K} 2\sigma_i^2 \left[ 1 - \frac{1}{P} \sum_{\lambda=1}^{P} R_i(\lambda + n_s) \right] \qquad (37)$$

$$(38) \Downarrow$$

$$\sum_{i=0}^{K} E\left\| \hat{h}_i - h_i(n_s) \right\|^2 \ge \frac{(K+1)\sigma_n^2}{P} + \sum_{i=0}^{K} \sigma_i^2 \left[ 1 - \frac{2}{P} \sum_{\lambda=1}^{P} R_i(\lambda + n_s) + \frac{1}{P^2} \sum_{\lambda=1}^{P} \sum_{\gamma=1}^{P} R_i(\lambda - \gamma) \right]$$

où $\sigma_i^2$ est la puissance moyenne du ième trajet, $n_s$ correspond au premier symbole qui suit la séquence d'apprentissage dans le bloc.

Pour la séquence de données D précédant la séquence d'apprentissage, les inégalités (37) et (38) deviennent:

$$\sum_{i=0}^{K} E\left\| \hat{h}_i - h_i(n'_s) \right\|^2 \le \frac{(K+1)\sigma_n^2}{P} + \sum_{i=0}^{K} 2\sigma_i^2 \left[ 1 - \frac{1}{P} \sum_{\lambda=1}^{P} R_i(\lambda + n'_s + K) \right] \quad (37')$$

$$(38') \Downarrow$$

$$\sum_{i=0}^{K} E\left\| \hat{h}_i - h_i(n'_s) \right\|^2 \ge \frac{(K+1)\sigma_n^2}{P} + \sum_{i=0}^{K} \sigma_i^2 \left[ 1 - \frac{2}{P} \sum_{\lambda=1}^{P} R_i(\lambda + n'_s + K) + \frac{1}{P^2} \sum_{\lambda=1}^{P} \sum_{\gamma=1}^{P} R_i(\lambda - \gamma) \right]$$

On suppose maintenant que le récepteur se déplace à une vitesse constante et que les trajets multiples dus à un grand nombre de réflexions ont une distribution d'angles d'arrivée uniformes. Les fonctions de corrélation normalisées $R_i(\Delta_t)$ sont alors supposées égales à $R(\Delta_t)$ qui est la transformée de Fourrier du spectre Doppler classique et est donnée par :

$$R(\Delta_t) = J_o(2\pi f_d \Delta_t) \quad (39)$$

où $J_o$ est la fonction de Bessel du premier ordre et $f_d$ est l'écart de fréquence maximal dû à l'effet Doppler donné par :

$$f_d = \frac{f_0 v}{c} \quad (40)$$

où $f_0$ est la fréquence porteuse, $v$ est la vitesse du mobile et $c$ est la vitesse du son.

Ceci correspond au cas le plus défavorable pour un canal mobile variant dans le temps. Si $2\pi f_d T_s n_s$ est petit devant 1, on peut effectuer l'approximation suivante :

$$R(n_s T_s) \approx 1 - (\pi f_d T_s)^2 n_s^2 \quad (41)$$

Soit $\varepsilon(n_s)$ l'erreur d'estimation normalisée à la position symbole $n_s$, définie par :

$$\varepsilon(n_s) = \frac{1}{\sigma^2} \sum_{i=0}^{K} E\left\| \hat{h}_i - h_i(n_s) \right\|^2 \qquad (42)$$

où $\sigma^2$ est la puissance moyenne du canal, donnée par:

$$\sigma^2 = \sum_{i=0}^{K} \sigma_i{}^2 \qquad (43)$$

Dans la suite, on considère une modulation à déplacement de phase à quatre états (MDP4). Le rapport $\frac{|s|^2 \sigma^2}{\sigma_n^2}$ peut être remplacé par le rapport signal à bruit $\frac{2E_b}{N_0}$ où $E_b$ désigne l'énergie transmise par bit et $\frac{N_0}{2}$ la densité bilatérale de bruit blanc additif gaussien. Dans le cas présent, il y a deux bits par symbole, mais plus généralement, dans le cas d'une modulation à déplacement de phase à M états (MDP-M), il y a $Log_2 M$ bits par symbole.

Il est alors possible de définir des fonctions limites supérieure et inférieure pour la longueur optimale de la séquence de données.

$$\varepsilon(n_s) \leqq \frac{K+1}{P} \cdot \frac{N_0}{2E_b} + 2(\pi f_d T_s)^2 \left(\frac{(P+1)(2P+1)}{6} + (P+1)n_s + n_s^2\right) = E_{max}(n_s) \qquad (44)$$

$$\varepsilon(n_s) \geqq \frac{K+1}{P} \cdot \frac{N_0}{2E_b} + 2(\pi f_d T_s)^2 \left(\frac{(P+1)^2}{4} + (P+1)n_s + n_s^2\right) = E_{min}(n_s) \qquad (45)$$

Pour la séquence de données D' précédant la séquence d'apprentissage, on obtient de la même façon les fonctions limites suivantes:

$$(44') \Downarrow$$

$$\varepsilon(n'_s) \leq \frac{K+1}{P} \cdot \frac{N_0}{2E_b} + 2(\pi f_d T_s)^2 \left(\frac{(P+1)(2P+1)}{6} + (P+1)(n'_s + K) + (n'_s + K)^2\right) = E'_{max}(n'_s)$$

$$\varepsilon(n'_s) \geqq \frac{K+1}{P} \cdot \frac{N_0}{2E_b} + 2(\pi f_d T_s)^2 \left(\frac{(P+1)^2}{4} + (P+1)(n'_s + K) + (n'_s + K)^2\right) = E'_{min}(n'_s) \qquad (45')$$

La longueur optimale $n_{opt}$ d'un bloc, qui doit être choisie de sorte que l'erreur quadratique moyenne d'estimation correspondante soit dans une plage prédéterminée, dépend ainsi des paramètres suivants :
- la longueur K du canal,
- la longueur P de la séquence de référence,
- le rapport signal à bruit $E_b/2N_o$,
- l'écart de fréquence maximal $f_d$ dû à l'effet Doppler, et
- la période symbole $T_s$, qui est l'inverse du débit symbole.

Les deux fonctions limites précitées peuvent être représentées graphiquement sous la forme de deux courbes paraboliques qui coupent l'axe des ordonnées en E1 et E2, en référence à la figure 4 :

$$E1 = \frac{K+1}{P} \cdot \frac{N_0}{2E_b} + 2(\pi f_d T_s)^2 \frac{(P+1)^2}{4} \qquad (46)$$

$$E2 = \frac{K+1}{P} \cdot \frac{N_0}{2E_b} + 2(\pi f_d T_s)^2 \frac{(P+1)(2P+1)}{6} \qquad (47)$$

Seules les valeurs positives de $n_s$ sont étudiées, puisque $n_s$ représente une longueur, et est donc toujours positive ou nulle.

La détermination de la longueur optimale $n_{opt}$ peut ainsi être effectuée de manière graphique, en référence à la figure 4: on spécifie une plage $[\varepsilon_1, \varepsilon_2]$ pour $\varepsilon(n_s)$. On applique cette plage d'erreur aux deux fonctions limites inférieure et supérieure pour en déduire deux intervalles $[n_{1M}, n_{1m}]$ et $[n_{2M}, n_{2m}]$ correspondant respectivement à la borne inférieure $\varepsilon_1$ et à la borne supérieure $\varepsilon 2$. L'intersection de ces deux intervalles fournit un intervalle résultant dans lequel on peut choisir une longueur optimale $n_{opt}$ de la séquence de données.

Une procédure analogue peut être appliquée pour déterminer un encadrement de la longueur optimale $n'_{opt}$ de la séquence de données D' précédant la séquence d'apprentissage. en outre, si les deux séquences de données sont de longueur identique, on peut alors raisonner simplement par symétrie et prendre $n_{opt} = n'_{opt}$.

La longueur P de la séquence de référence est en pratique choisie une fois pour toutes et optimisée pour des variations moyennes attendues du canal. cette longueur devient alors un paramètre du récepteur intervenant dans la détermination de la longueur optimale du bloc de données.

On obtient une estimation de la longueur optimale $N_{opt}$ d'un bloc de données en effectuant la somme des estimations de longueur optimale $n_{opt}$, $n'_{opt}$ respectives des deux séquences de données D, D', de la longueur P de la séquence de référence SR et de la longueur K de la réponse impulsionnelle du canal.

Si cette longueur optimale Nopt est supérieure à la longueur réelle N du bloc, alors on n'utilise pas de poursuite dans le processus d'estimation du canal et d'égalisation.

En revanche, si la longueur optimale Nopt est inférieure à la longueur réelle du bloc, on met en oeuvre une poursuite PO des variations du canal au sein du processus d'égalisation EG avant un traitement ultérieur 10 des symboles de données reçus.

Par hypothèse, les symboles compris dans un sous-bloc du bloc de données de longueur Nopt centré sur la séquence d'apprentissage ne nécessitent pas une poursuite des variations du canal.

Il s'ensuit que le dispositif de poursuite doit permettre une mise à jour de l'estimation du canal pour les symboles du bloc de données qui ne sont pas compris dans ce sous-bloc mais il n'est pas indispensable qu'il produise cette mise à jour pour les symboles du sous-bloc.

Ainsi, le dispositif de poursuite n'est mis en oeuvre que lorsque cela est nécessaire pour garantir les performances du récepteur, ce qui conduit en pratique à une réduction appréciable de consommation.

Toutes les opérations décrites: estimation du canal, égalisation, poursuite, sont effectuées sur des grandeurs numériques et peuvent donc être aisément implémentées sur un ou plusieurs circuits intégrés numériques.

Par ailleurs, on peut envisager un calcul direct de la longueur optimale Nopt du bloc au moyen d'un processeur, dédié ou non, dans lequel sont implantées des fonctions mathématiques obtenues à partir d'une étude théorique du canal, par exemple les fonctions d'encadrement qui viennent d'être établies plus haut. Des moyens de calcul implantés dans le récepteur, et plus généralement de contrôle et de traitement, peuvent être utilisés pour la détermination de la longueur optimale.

Bien sûr, l'invention n'est pas limitée aux exemples qui viennent d'être décrits et de nombreux aménagements peuvent être apportés à ces exemples sans sortir du cadre de l'invention. Ainsi, on peut envisager la prise en compte de paramètres de réception autres que ceux proposés dans la description. En outre, d'autres méthodes pour constituer les tables de vérité peuvent être appliquées pour mettre en oeuvre le procédé selon l'invention.

**Revendications**

1.  Procédé pour égaliser un bloc de données(BD) en réception dans un système de communication à accès multiple à répartition dans le temps (AMRT), caractérisé en ce qu'à la réception du bloc (BD), on estime la réponse impulsionnelle du canal sur lequel ce bloc a été transmis, on évalue un ensemble (P) de paramètres de réception, on détermine à partir dudit ensemble (P) de paramètres une longueur optimale (Nopt) du bloc(BD), et si cette longueur optimale (Nopt) est inférieure à la longueur réelle (N) du bloc, on entreprend une poursuite (PO) des variations du canal.

2.  Procédé selon la revendication 1, le bloc (BD) reçu comprenant des symboles de données (D', D) et une séquence d'apprentissage (SA), caractérisé en ce que l'ensemble (P) de paramètres comprend des paramètres connus en réception (PA), notamment la longueur du canal, la longueur de la séquence d'apprentissage(SA), et des paramètres calculables (PC), notamment le rapport signal à bruit et l'écart de fréquence maximal dû à l'effet Doppler.

3.  Procédé selon la revendication 2, caractérisé en ce que les paramètres connus en réception (PA) comprennent en outre la période symbole et le module des symboles.

4.  Procédé selon l'une des revendications 2 ou 3, caractérisé en ce que les paramètres calculables (PC) comprennent des paramètres calculés en réception pour d'autres besoins, notamment l'écart de fréquence maximal dû à l'effet Doppler.

5.  Procédé selon l'une quelconque des revendications 2 à 4, ce bloc de données (BD) comprenant une séquence d'apprentissage (SA) comportant une séquence de référence (SR) et des symboles précurseurs, et des symboles de données répartis en une première séquence de données (D') et une seconde séquence de données (D) transmises respectivement avant et après ladite séquence d'apprentissage (SA), ledit canal de communication présentant une réponse impulsionnelle de longueur finie (K), caractérisé en ce que la détermination d'une longueur optimale ($N_{opt}$) du bloc de données (BD) comprend une étape d'optimisation de la longueur ($n_s$, $n'_s$) de chaque séquence de données (D, D') dans laquelle on réalise une estimation de la réponse impulsionnelle du canal de communication à partir de symboles reçus (R) de la séquence de référence (SR) et des symboles précurseurs, on associe à chaque séquence de données (D, D') une erreur quadratique moyenne d'estimation dont on détermine un encadrement par deux fonctions limites respectivement inférieure et supérieure ($E_{min}(n_s)$, $E_{max}(n_s)$; $E'_{min}(n_s)$, $E'_{max}(n_s)$) dépendant notamment de la longueur ($n_s$) de cette séquence de données et de la longueur de la séquence de référence, et on détermine à partir desdites fonctions limites inférieure et supérieure un encadrement de la longueur optimale ($n_{opt}$, $n'_{opt}$) de chaque séquence de données correspondant à une plage spécifiée d'erreur quadratique.

6. Procédé selon la revendication 5, appliqué à des blocs de données comprenant des séquences de type à auto-corrélation-zéro et amplitude constante (CAZAC) ou pseudo-CAZAC, le bruit affectant le canal de communication étant approximé par un bruit blanc additif gaussien, caractérisé en ce que l'erreur quadratique moyenne d'estimation normalisée correspondant à la séquence de données (D) suivant la séquence de référence (SR) est bornée par les fonctions limites respectivement inférieure et supérieure ($E_{min}(n_s)$, $E_{max}(n_s)$) suivantes:

$$E_{min}(n_s) = \frac{K+1}{P} \cdot \frac{N_0}{2E_b} + 2(\pi f_d T_s)^2 (\frac{(P+1)^2}{4} + (P+1)n_s + n_s^2)$$

$$E_{max}(n_s) = \frac{K+1}{P} \cdot \frac{N_0}{2E_b} + 2(\pi f_d T_s)^2 (\frac{(P+1)(2P+1)}{6} + (P+1)n_s + n_s^2)$$

où :
- $n_s$ est la longueur de la séquence de données,
- K est la longueur du canal,
- P est la longueur de la séquence de référence (SR),
- Ts est la période symbole,
- No/2 est une densité bilatérale de bruit blanc additif gaussien,
- $E_b$ est l'énergie transmise par bit,
- $f_d$ est l'écart maximal de fréquence dû à l'effet Doppler,

et en ce que l'on détermine un encadrement [$n_{2M}$, $n_{1m}$] de la longueur optimale ($n_{opt}$) en appliquant aux deux fonctions limites inférieure et supérieure ($E_{min}(n_s)$, $E_{max}(n_s)$) une plage spécifiée [$\varepsilon_1$, $\varepsilon_2$] d'erreur quadratique.

7. Procédé selon l'une des revendications 5 ou 6, appliqué à des blocs de données comprenant des séquences de type à auto-corrélation-zéro et amplitude constante (CAZAC) ou pseudo-CAZAC, le bruit affectant le canal de communication étant approximé par un bruit blanc additif gaussien, caractérisé en ce que l'erreur quadratique moyenne d'estimation normalisée correspondant à la séquence de données (D) précédant la séquence de référence (SR) est bornée par les fonctions limites respectivement inférieure et supérieure ($E'_{min}(n'_s)$, $E'_{max}(n'_s)$) suivantes :

$$E'_{min}(n'_s) = \frac{K+1}{P} \cdot \frac{N_0}{2E_b} + 2(\pi f_d T_s)^2 (\frac{(P+1)^2}{4} + (P+1)(n'_s + K) + (n'_s + K)^2)$$

$$E'_{max}(n'_s) = \frac{K+1}{P} \cdot \frac{N_0}{2E_b} + 2(\pi f_d T_s)^2 (\frac{(P+1)(2P+1)}{6} + (P+1)(n'_s + K) + (n'_s + K)^2)$$

où :
- $n'_s$ est la longueur de la séquence de données précédant la séquence de référence,
- K est la longueur du canal,
- P est la longueur de la séquence de référence (SR),
- $T_s$ est la période symbole,
- No/2 est une densité bilatérale de bruit blanc additif gaussien,
- $E_b$ est l'énergie transmise par bit,
- $f_d$ est l'écart maximal de fréquence dû à l'effet Doppler,

et en ce que l'on détermine un encadrement de la longueur optimale ($n'_{opt}$) en appliquant aux deux fonctions limites inférieure et supérieure ($E'_{min}(n'_s)$, $E'_{max}(n'_s)$) une plage spécifiée [$\varepsilon'_1$, $\varepsilon'_2$] d'erreur quadratique.

8. Procédé selon l'une quelconque des revendications 1 à 7, caractérisé en ce qu'au cours de l'égalisation, on accède à la longueur optimale (Nopt) du bloc (BD) par lecture d'une ou plusieurs tables de vérité (T) adressées en entrée par tout ou partie de l'ensemble (P) de paramètres.

9. Procédé selon la revendication 8, caractérisé en ce que les tables de vérité (T) pour la fourniture de la longueur optimale (Nopt) du bloc (BD) sont constituées à partir de résultats issus de simulations préalables des performances du canal.

10. Procédé selon la revendication 8, caractérisé en ce que les tables de vérité (T) pour la détermination de la longueur optimale (Nopt) du bloc (BD) sont constituées à partir d'acquisitions de mesure effectuées préalablement sur site.

11. Procédé selon la revendication 8, caractérisé en ce que les tables de vérité (T) pour la détermination de la longueur optimale (Nopt) du bloc sont constituées à partir de résultats d'une étude théorique des performances de la réception.

12. Récepteur (1) appartenant à un système de communication à accès multiple à répartition dans le temps (AMRT), comprenant des moyens (EG) pour égaliser un bloc de données (BD) transmis sur un canal de communication, ces moyens égaliseurs (EG) comportant des moyens (PO) pour poursuivre les variations de ce canal, mettant en oeuvre le procédé selon l'une quelconque des revendications précédentes, caractérisé en ce qu'il comprend en outre des moyens (T) pour fournir en fonction d'un ensemble (P) de paramètres de réception une longueur optimale (Nopt) du bloc (BD), des moyens (5) pour comparer cette longueur optimale (Nopt) à la longueur réelle (N) du bloc(BD), lesdits moyens de poursuite (PO) des variations du canal étant activés uniquement lorsque les moyens de comparaison (5) indiquent que la longueur optimale (Nopt) du bloc (BD) est inférieure à la longueur réelle (N) du bloc(BD).

13. Récepteur (1) selon la revendication 12, caractérisé en ce que les moyens pour fournir la longueur optimale (Nopt) du bloc (BD) comprennent des moyens pour stocker une ou plusieurs tables de vérité (T) adressées par tout ou partie des paramètres de réception (P) et délivrant en sortie ladite longueur optimale (Nopt) du bloc(BD).

14. Récepteur (1) selon l'une des revendications 12 ou 13, caractérisé en ce qu'il comprend en outre des moyens (4) pour calculer certains des paramètres de réception (PC), notamment un rapport signal à bruit ou un écart de fréquence maximal dû à l'effet Doppler.

15. Récepteur (1) selon l'une quelconque des revendications 12 à 14, comprenant en outre des moyens de contrôle et de traitement, caractérisé en ce que ces moyens de contrôle et de traitement sont agencés pour effectuer la détermination de la longueur optimale (Nopt) du bloc (BD) à partir des paramètres de réception.

16. Procédé selon l'une quelconque des revendications 1 à 11 et récepteur selon l'une quelconque des revendications 12 à 15, appliqués notamment à des séquences dites CAZAC, c'est à dire à amplitude constante et auto-corrélation zéro, ou à des séquences dites pseudo-CAZAC, c'est à dire CAZAC dans une plage autour du pic principal, caractérisés en ce que la longueur optimale ($N_{opt}$) du bloc (BD) est choisie entre une limite inférieure ($n_{2M}$) et une limite supérieure ($n_{1m}$) qui sont déterminées à partir des paramètres (PP) de réception.

$$\underline{\text{FIG\_1}}$$

$$\underline{\text{FIG\_2}}$$

FIG.3

FIG.4

Office européen
des brevets

## RAPPORT DE RECHERCHE EUROPEENNE

Numero de la demande

EP 94 40 0418

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | 1990 IEEE MILITARY COMMUNICATIONS CONFERENCE, MONTEREY (CA), vol.2 OF 3, Septembre 1990, NY, US pages 643 - 647 DOHERTY ET AL 'Equalization for Mobile Communications Channels' * page 643, colonne de droite, ligne 9 - page 644, colonne de gauche, ligne 2 * * page 644, colonne de gauche, ligne 40 - colonne de droite, ligne 18 * --- | 1,2,12 | H04B7/005 |
| A | EP-A-0 496 467 (N.V. PHILIPS GLOEILAMPENFABRIEKEN) * abrégé * * colonne 1, ligne 40 - colonne 2, ligne 46 * --- | 1,12 | |
| A | EP-A-0 415 897 (TELEFONBOLAGET L M ERICSON) * abrégé * --- | 1,12 | |
| A | US-A-5 127 051 (CHAN ET AL) * abrégé * --- | 1,12 | DOMAINES TECHNIQUES RECHERCHES (Int.Cl.5) H04B H04L |
| A | IEEE TRANSACTIONS ON COMMUNICATION TECHNOLOGY., vol.38, no.11, Novembre 1990, NEW YORK US pages 1980 - 1986 KORN 'GMSK with Differential Phase Detection in the Satellite Mobile Channel' * abrégé * * page 1983, colonne de droite, ligne 31 - ligne 46; figure 4 * ----- | 6,7 | |

Le présent rapport a été établi pour toutes les revendications

| Lieu de la recherche | Date d'achèvement de la recherche | Examinateur |
|---|---|---|
| LA HAYE | 21 Juin 1994 | Bossen, M |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant